# FASCICULE DE BREVET EUROPEEN

(11) **EP 0 716 220 B1**
(45) Date de publication et mention de la délivrance du brevet: **10.03.1999**
(21) Numéro de dépôt: 95402742.1
(22) Date de dépôt: 06.12.1995
(51) Int. Cl.: F01D 25/24, F01D 9/04

(54) **Distributeur monobloc non-sectorisé d'un stator de turbine de turbomachine**
Ungeteilter Leitkranz für eine Turbomaschine
Undivided stator ring for a turbomachine

(30) Priorité: 07.12.1994 FR 9414692
(43) Date de publication de la demande: 12.06.1996
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Benoist, Josette, F-77350 Le Mee S/Seine (FR); Martyez, Paul, F-91230 Montgeron (FR); Taillant, Jean-Claude Christian, F-77000 Vaux le Penil (FR)

(56) Documents cités:
- EP-A- 0 192 556
- EP-A- 0 192 557
- EP-A- 0 320 620
- GB-A- 2 250 782
- US-A- 2 869 821
- US-A- 3 062 499
- US-A- 4 643 636
- US-A- 5 141 393

## Description

### Domaine de l'invention

L'invention concerne la turbine haute pression d'une turbomachine, telle que les turboréacteurs utilisés sur les avions. Elle concerne plus précisément la structure monobloc du distributeur du stator de cette turbine haute pression.

### Art antérieur et problème posé

Les turbomachines actuelles ou futures, telles que les turboréacteurs qui équipent les avions civils et militaires font actuellement l'objet d'études visant à l'amélioration des performances et de la maintenance de ces turbomachines. Les conséquences de ces améliorations sont l'obtention d'une diminution de la consommation de carburant et des frais d'entretien du moteur, qu'il soit placé sous l'aile de l'avion ou en atelier de révision. En conséquence, la prise en compte de ces objectifs oblige les avionneurs à reconsidérer la définition de certaines parties, voire de toutes les parties, de ces turbomachines.

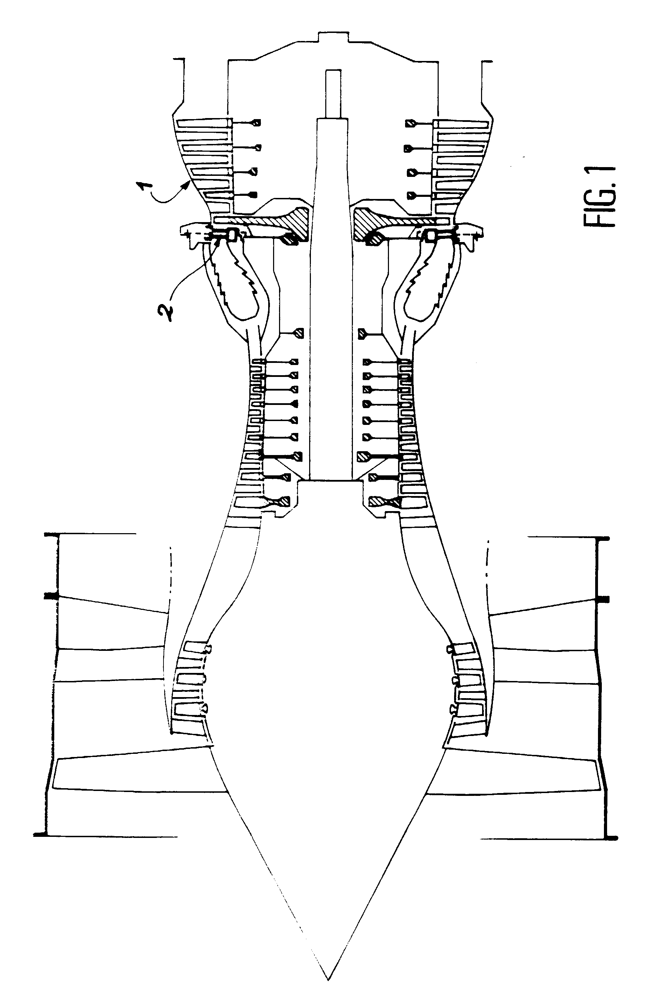

En référence à la figure 1, au niveau de la turbine haute pression 1 de la turbomachine, le distributeur du stator est réalisé, dans la majorité des cas par des secteurs composés de plusieurs aubes liées par des plates-formes. Ainsi, il est fréquent de rencontrer des secteurs composés de deux aubes liées par une plate-forme intérieure et une plate-forme extérieure. Ces secteurs sont ensuite fixés sur des viroles circulaires pour former le distributeur.

Il est évident que les zones de rapprochement et de liaison de ces secteurs créent des imperfections geométriques dans ce montage du distributeur et perturcent l'écoulement de l'air à travers la turbine haute pression. Ces imperfections permettent l'existence de fuites qui sont toujours néfastes au rendement de la turbomachine.

Le but de l'invention est de remédier à ces inconvénients en réalisant une veine aérodynamique la plus lisse possible et en réduisant au maximum les fuites de débit d'air du moteur pour améliorer le niveau de performance. Il est également envisagé de pouvoir utiliser des pales de distributeur démontables pour réduire les coûts de réparation.

D'autre part, on connaît par le brevet américain US-A-4 643 636 un distributeur de turbine dont les plates-formes interne et externe sont circulaires et monoblocs.

En outre, EP-A-192 557 décrit un carter de turbomachine composé de deux enveloppes reliées par des biellettes, une série de biellettes étant disposées de façon radiale et deux jeux de couples de biellettes constituant des points fixes à partir desquels se développent les dilatations périphériques.

### Résumé de l'invention

A cet effet, l'objet principal de l'invention est donc un stator de turbine de turbomachine à axe longitudinal comportant un distributeur monobloc non-sectorisé qui comprend:
- des aubes s'étendant radialement par rapport à l'axe de la turbomachine ;
- une plate-forme intérieure par rapport à laquelle sont fixées axialement les aubes par une première extrémité ;
- une plate-forme extérieure sur laquelle sont fixées les aubes par une deuxième extrémité ; et
- des moyens de fixation radiale, des moyens de fixation en rotation et des moyens de fixation axiale.

Selon l'invention, les moyens de fixation radiale du distributeur sont souples pour permettre une légère dilatation raciale des aubes et des deux plates-formes et les aubes sont montées coulissantes radialement dans la plate-forme intérieure qui est fixée elle-même sur le moyeu du stator.

L'étanchéité est assurée par deux joints d'étanchéité souples, plats, montés en amont et en aval de la plate-forme extérieure.

Dans la réalisation principale du distributeur selon l'invention, les moyens de fixation radiale souples, les moyens de fixation en rotation et les moyens de fixation axiale sont assurés par une biellette montée pivotante sur la plate-forme extérieure par une première extrémité et montée pivotante sur le carter par une deuxième extrémité.

Dans ce cas, le distributeur se complète de :
- une bride fixée sur la surface extérieure de la plate-forme extérieure ; et
- une chape fixée sur la première extrémité de la biellette.

Les moyens de fixation axiale sont complétés par une paroi aval de la chambre de combustion sur laquelle la plate-forme intérieure est fixée et par une paroi radiale de la pièce porte-abradable du stator, la plate-forme intérieure étant montée coulissante radialement dans la fente constituée par ces deux pièces.

Le coulissement des aubes dans la plate-forme intérieure est assuré de préférence par une fente pratiquée sur la surface extérieure de la plate-forme intérieure et dans laquelle l'aube correspondante peut coulisser.

### Liste des figures

L'invention et ses différentes caractéristiques seront mieux comprises à la lecture de la description suivante qui est accompagnée de plusieurs figures représentant respectivement :
- figure 1, en coupe longitudinale, une turbomachine utilisant le distributeur selon l'invention ;
- figure 2, en coupe longitudinale, le distributeur selon l'invention ;
- figure 3, en vue de dessus, deux aubes du distributeur selon l'invention ; et
- figure 4, une vue frontale partielle du distributeur selon l'invention.

### Description détaillée d'une réalisation de l'invention

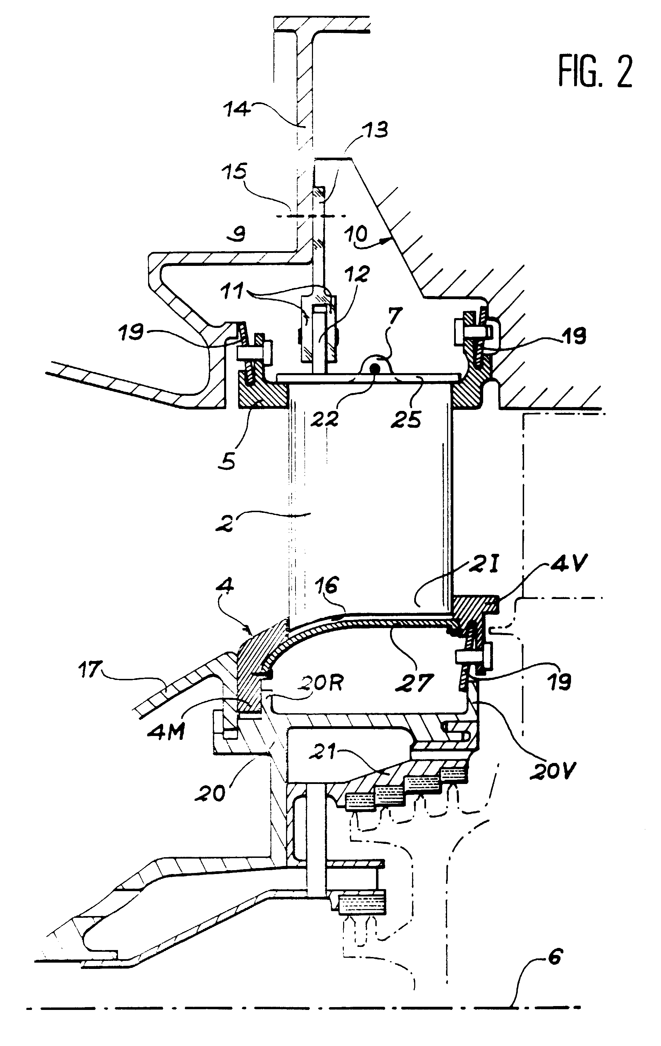

En référence à la figure 2, on constate que les aubes 2 sont montées entre la partie externe 10 du stator et son moyeu central 20. On utilise pour ce positionnement une plate-forme intérieure 4 et une plate-forme extérieure 5. Les aubes 2 sont ainsi positionnées axialement par rapport à l'axe longitudinal 6 de la turbomachine, radialement par rapport à ce même axe et sont également maintenues en rotation autour de cet axe.

Il est à noter que les deux plates-formes intérieure 4 et extérieure 5 sont constituées chacune d'une seule virole faite d'une seule pièce. La plate-forme intérieure 4 est fixée axialement par son côté amont 4M qui prend appui contre la paroi aval de la chambre de combustion 17. Or, le côté amont 4M se trouve coincé entre cette paroi aval de la chambre de combustion 17 et un redan 20R extérieur du moyeu 20 du stator. Ainsi, la plate-forme intérieure 4 peut, lors des différentes dilatations du distributeur, coulisser radialement par rapport à ces deux pièces fixes. Le côté aval 4V de la plate-forme intérieure 4 n'est fixé à aucune pièce. Par contre, il supporte un joint d'étanchéité 19 qui prend également appui sur la partie aval 20V du moyeu 20.

La plate-forme intérieure 4 est complétée dans son milieu par une tôle mince 27 qui est fixée à la fois au côté amont 4M et au côté aval 4V.

La différence d'épaisseur entre la tôle mince 27 et les côtés amont 4M et aval 4V font que la plate-forme intérieure présente une fente 16 dans laquelle peut coulisser radialement l'aube 2 par son extrémité intérieure 2I.

On signale que le moyeu 20 du stator supporte à la hauteur du distributeur selon l'invention la pièce porte abradable 21.

Les extrémités extérieures 2S des aubes sont montées de manière fixe sur la plate-forme extérieure 5. Ces extrémités extérieures 2S forment d'ailleurs une butée de positionnement radial par rapport à cette plate-forme extérieure 5. Leur fixation est obtenue au moyen de bossages 7 qui sont percés de manière à pouvoir y introduire un axe 22 solidarisant l'aube 2 avec la plate-forme extérieure 5 qui possède deux mêmes bossages ou brides percées, non représentés, et alignés avec le bossage 7 de l'aube.

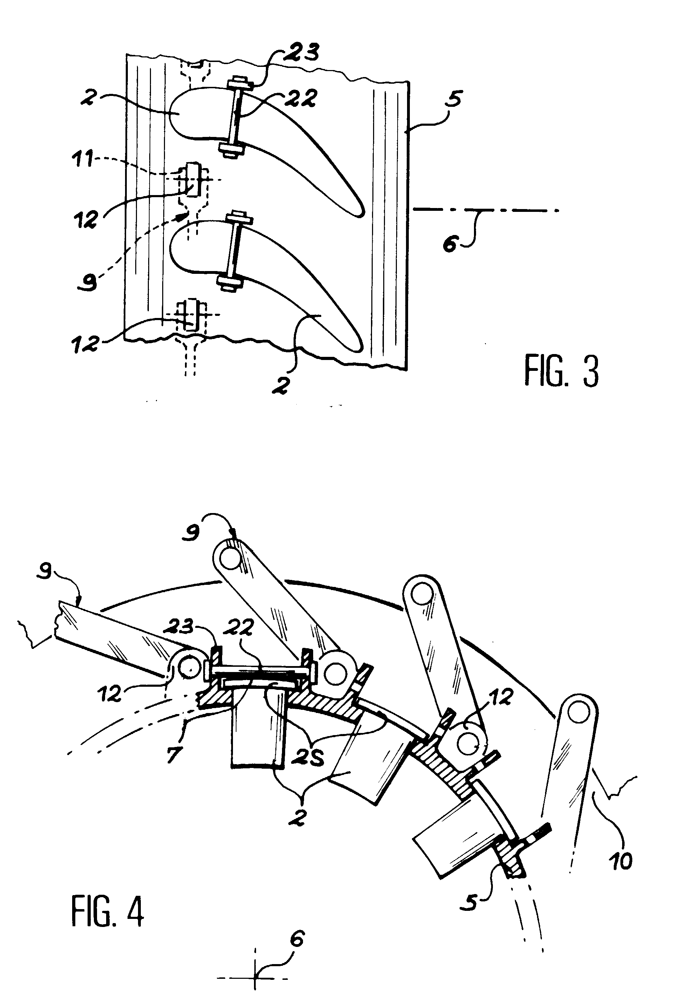

La figure 3 permet de mieux distinguer cette fixation. En effet, cette figure 3 est une coupe en vue de dessus au niveau des bossages 7 des aubes 2. On peut y distinguer pour chaque aube un axe 22 traversant l'aube 2 et cassant à travers deux bossages latéraux 23 solidaires de la plate-forme extérieure 5. L'orientation de cette fixation a été choisie inclinée, mais ceci n'est qu'un exemple de réalisation.

Le positionnement axial et la fixation en rotation des aubes 2 autour de l'axe 6 sont réalisés au moyen d'une série de biellettes 9 montées pivotantes par rapport au carter 14 du stator 10 et par rapport à la plate-forme extérieure 5. Plus précisément, chaque biellette 9 possède une première extrémité inférieure qui affecte la forme de deux demi-chapes 11. Ces dernières sont placées autour d'une bride 12 solidaire de l'extrémité supérieure 2S de l'aube 2, un axe étant introduit à l'intérieur de ce montage. Ainsi, chaque biellette 9 est montée pivotante autour d'un axe parallèle à l'axe longitudinal 6 de la turbomachine.

Comme le montre la figure 2, à son autre extrémité 13, chaque biellette 9 est également montée pivotante autour d'un autre axe 15 parallèle à l'axe longitudinal de la turbomachine par une liaison pivotante qui est simplement suggérée sur cette figure par cet axe de pivotement 15.

Ainsi, chaque aube peut bouger légèrement radialement, compte tenu des dilatations dues aux différences de températures de fonctionnement de la turbomachine. Bien entendu, la plate-forme extérieure 5, qui est solidaire de cette aube 2, subit les mêmes mouvements radiaux par rapport à l'axe longitudinal 6. Elle n'est donc pas fixée par rapport au stator 10, mais est équipée en amont et en aval d'un joint plat annulaire 19 qui prennent chacun appui contre une surface de jonction du stator 10.

La figure 3 montre également l'emplacement des brides 12 par rapport aux aubes 2, autour de l'axe longitudinal 6 de la turbomachine. En fait, chaque bride 12 est placée entre deux aubes 2, et plus particulièrement entre deux extrémités 2S, représentées sur la figure 2, de chaque aube.

La figure 4 montre clairement ce décalage des brides 12 et des biellettes 9 par rapport à l'extrémité 2S de chaque aube 2.

Cette figure 4 montre également la fixation de ses extrémités supérieures 2S par rapport au stator 10, notamment au moyen de l'axe 22, des bossages 7 et des brides percées 23.

On comprend ainsi qu'une légère dilatation de l'ensemble du distributeur est tolérée, les biellettes 9 guidant la plate-forme extérieure 5 du distributeur radialement, tout en la maintenant axialement.

Cette non-sectorisation du distributeur de la turbine haute pression dans un turboréacteur obtenue par des plates-formes intérieure et extérieure monoblocs permet de disposer d'une veine fluidique plus lisse et donc d'obtenir un gain en performance du turboréacteur.

Les fuites de flux de gaz sont également réduites, ce qui constitue également un gain sur le plan des performances du turboréacteur.

Le fait que les aubes soient démontables permet d'optimiser le coût de réparation d'un tel turboréacteur.

## Revendications

1. Stator de turbine de turbomachine à axe longitudinal (6) comportant un distributeur monobloc non-sectorisé comprenant :
- des aubes (2) s'étendant radialement autour de l'axe longitudinal (6) ;
- une plate-forme intérieure (4) par rapport à laquelle sont fixées axialement les aubes (2) par une première extrémité intérieure (2I) ;
- une plate-forme extérieure (5) sur laquelle sont fixées les aubes (2) par une deuxième extrémité extérieure (2S) ;
- des moyens de fixation en rotation et des moyens de fixation axiale ; et
- des moyens de fixation radiale du distributeur souples pour permettre une dilatation radiale des aubes (2) et des plates-formes (4, 5),
caractérisé en ce que les aubes (2) sont montées coulissantes radialement dans la plate-forme intérieure (4) qui est fixe par rapport au moyeu du stator (20) et en ce que les moyens de fixation radiale souples, les moyens de fixation en rotation et les moyens de fixation axiale sont constitués de biellettes (9) montées chacune pivotante sur la plate-forme extérieure (5) par une première extrémité et sur le carter (14) du stator (10) par une deuxième extrémité (13).

2. Stator de turbine selon la revendication 1, caractérisé en ce qu'il comprend pour chaque biellette (9), une bride (12) fixée sur la surface externe de la plate-forme extérieure (5) et en ce que la première extrémité de chaque biellette (9) est constituée de deux demi-chapes (11).

3. Stator de turbine selon la revendication 1, caractérisé en ce que la plate-forme intérieure (4) possède des fentes (16) permettant à chaque aube de coulisser radialement par son extrémité intérieure (2I).

## Patentansprüche

1. Turbinenstator einer Turbomaschine mit Längsachse (6) mit einem ungeteilten Leitkranz, bestehend aus:
- Schaufeln (2), die sich radial um die Längsachse (6) erstrecken,
- einer inneren Plattform (4), zu der die Schaufeln (2) axial mit einem ersten, inneren Ende (2I) befestigt sind,
- einer äußeren Plattform (5), an der die Schaufeln (2) axial mit einem zweiten, äußeren Ende (2S) befestigt sind,
- Drehbefestigungsmitteln und axialen Befestigungsmitteln, und
- flexiblen radialen Befestigungsmitteln für den Leitkranz, um eine radiale Ausdehnung der Schaufeln (2) und der Plattformen (4, 5) zu ermöglichen,
**dadurch gekennzeichnet, daß** die Schaufeln (2) radial verschiebbar in der inneren Plattform (4) angebracht sind, die gegenüber der Nabe des Stators feststehend ist, und daß die flexiblen radialen Befestigungsmittel, die Drehbefestigungsmittel und die axialen Befestigungsmittel aus Stangen (9) bestehen, die jeweils an der äußeren Plattform (5) mit einem ersten Ende und an dem Gehäuse (14) des Stators (10) mit einem zweiten Ende (13) schwenkbar angebracht sind.

2. Turbinenstator nach Anspruch 1, **dadurch gekennzeichnet, daß** er für jede Stange (9) einen Flansch (12) aufweist, der an der Außenfläche der äußeren Plattform (5) angebracht ist, und daß das erste Ende jeder Stange (9) aus zwei Gabelschenkeln (11) besteht.

3. Turbinenstator nach Anspruch 1, **dadurch gekennzeichnet, daß** die innere Plattform (4) Schlitze (16) aufweist, so daß sich jede Schaufel mit ihrem inneren Ende (2I) radial verschieben kann.

## Claims

1. Stator for the turbine of a turbomachine of longitudinal axis (6), comprising an undivided one-piece ring comprising:
- vanes (2) extending radially about the longitudinal axis (6);
- an interior platform (4) with respect to which the vanes (2) are fixed axially by a first, interior, end (2I);
- an exterior platform (5) to which the vanes (2) are fixed by a second, exterior, end (2S);
- means of fixing in terms of rotation and axial fixing means; and
- flexible means of radially fixing the ring to allow radial expansion of the vanes (2) and of the platforms (4, 5),
characterized in that the vanes (2) are mounted so that they can slide radially in the interior platform (4) which is stationary with respect to the hub of the stator (20), and in that the flexible radial-fixing means, the means for fixing in terms of rotation and the axial fixing means consist of link rods (9) each mounted so that it can pivot on the exterior platform (5) via a first end, and on the casing (14) of the stator (10) via a second end (13).

2. Turbine stator according to Claim 1, characterized in that it comprises, for each link rod (9), a flange (12) fixed to the external surface of the exterior platform (5), and in that the first end of each link rod (9) consists of two half-yokes (11).

3. Turbine stator according to Claim 1, characterized in that the interior platform (4) has slots (16) allowing each vane to slide radially via its interior end (2I).
